# EUROPEAN PATENT APPLICATION

(11) **EP 4 027 497 A1**
(43) Date of publication of application: **13.07.2022**
(21) Application number: 21863886.4
(22) Date of filing: 27.04.2021
(51) Int. Cl.: H02K 7/00, B60C 23/04, H02K 21/24

(54) **GENERATOR AND TIRE CONDITION MONITORING DEVICE**

(30) Priority: 04.09.2020 JP 2020149485
(71) Applicant: Pacific Industrial Co., Ltd., Ogaki-shi, Gifu 503-8603 (JP)
(72) Inventor: MORI Hirotake, Ogaki-shi, Gifu 503-8603 (JP)
(74) Representative: Kramer Barske Schmidtchen Patentanwälte PartG mbB
(86) International application number: PCT/JP2021/016847
(87) International publication number: WO 2022/049827

(57) **Abstract**

To provide a power generator that can effectively use rotational energy of a tire and supply electric power to an electric device.

A power generator 10 includes: a stator 20 fixed to a wheel 81; and a rotor 30 disposed coaxially with the wheel 81 and rotatably supported by the stator 20. The power generator 10 generates electric power by relative rotation between the stator 20 and the rotor 30, and supplies the electric power to an electric device attached to the wheel 81. The power generator 10 further includes: a blade portion 50 fixed to the rotor 30; a container portion 40 that is fixed to one of the rotor 30 and the stator 20 and houses the blade portion 50; and liquid L which is stored in the container portion 40 in an amount smaller than a volume of the container portion 40 and in which at least a part of the blade portion 50 is immersed.

## Description

### TECHNICAL FIELD

The present disclosure relates to a power generator and a tire state monitoring device including the power generator.

### BACKGROUND ART

Conventionally, a technology for attaching an electric device and a power source thereof to a wheel has been known (see Patent Document 1, for example).

### RELATED ART DOCUMENTS

### PATENT DOCUMENTS

Patent document 1: WO 2019/194303 A (Paragraphs [0024], [0026], [0027], etc.)

### SUMMARY OF THE INVENTION

### PROBLEMS TO BE SOLVED BY THE INVENTION

With respect to the above-described conventional technology, there is a demand for development of a technology capable of supplying electric power to an electric device by effectively using rotational energy of a tire.

### MEANS OF SOLVING THE PROBLEMS

A power generator according to one aspect of the invention made to solve the above problem includes: a stator fixed to a wheel; and a rotor disposed coaxially with the wheel and rotatably supported by the stator, and the power generator generates electric power by relative rotation between the stator and the rotor, and supplies the electric power to an electric device attached to the wheel. The power generator further includes: a blade portion fixed to the rotor; a container portion that is fixed to one of the rotor and the stator and houses the blade portion; and a liquid which is contained in the container portion in an amount smaller than a volume of the container portion and in which at least a part of the blade portion is immersed.

### BRIEF DESCRIPTION OF THE DRAWINGS

Fig. 1 is a perspective view of a wheel to which a power generator according to a first embodiment of the present disclosure is attached.
Fig. 2 is a cross-sectional view of the wheel to which the power generator is attached.
Fig. 3 is a partially broken perspective view of the power generator.
Fig. 4(A) is a front cross-sectional view of a container portion, and Fig. 4(B) is a side cross-sectional view of the power generator.
Fig. 5 is a cross-sectional view of liquid in the container portion when a rotor co-rotates with a stator.
Fig. 6 is a partially broken perspective view of a power generator according to a second embodiment.
Fig. 7(A) is a front cross-sectional view of a container portion, and Fig. 7(B) is a side cross-sectional view of the power generator.
Fig. 8 is a cross-sectional view of liquid in the container portion when a rotor co-rotates with a stator.
Fig. 9 is a front cross-sectional view of a container portion of a power generator according to another embodiment.

### MODE FOR CARRING OUT THE INVENTION

### [First embodiment]

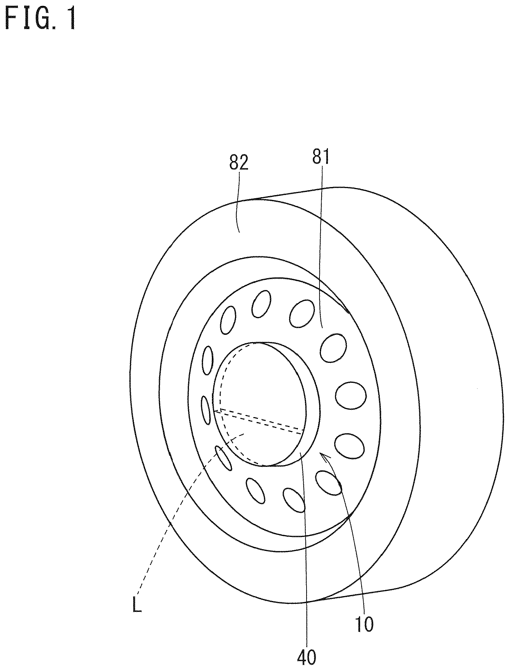

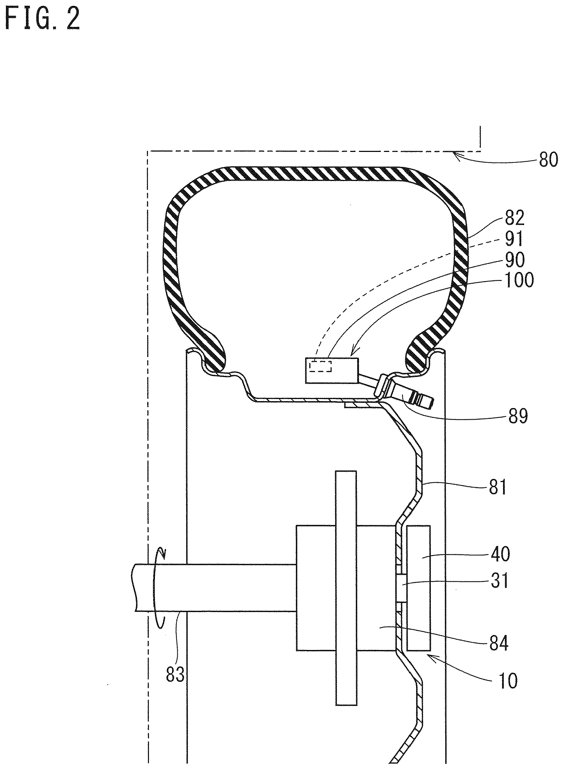

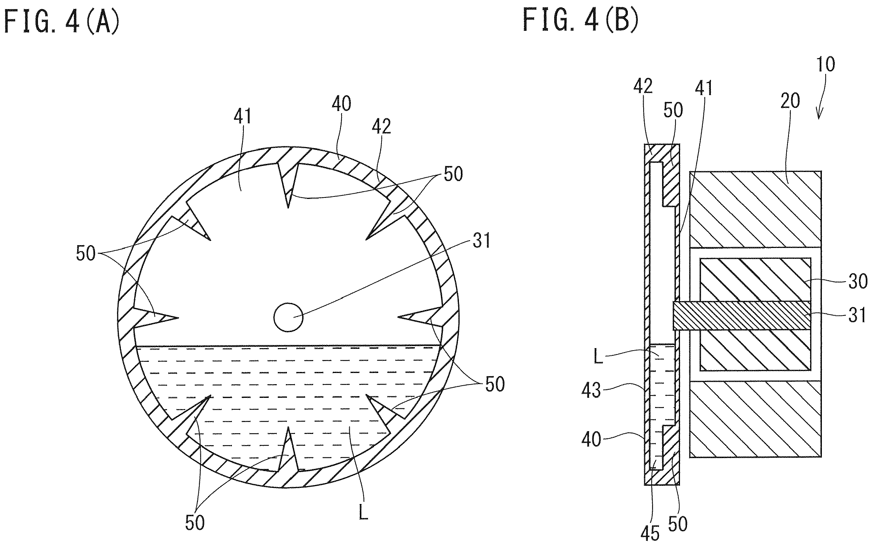

Figs. 1 and 2 illustrate a power generator 10 of the present embodiment. The power generator 10 is assembled on a wheel 81 of a vehicle 80. Specifically, the power generator 10 includes a motor including a stator 20 (see Fig. 4(B)) fixed to the wheel 81 and a rotor 30 rotatably supported by the stator 20. The power generator 10 can generate electric power by relative rotation between the stator 20 and the rotor 30.

The stator 20 is fixed to, for example, an outer side part of a hub 84, of the wheel 81 fixed to the wheel shaft 83, in a vehicle width direction (see Fig. 2), and is disposed so as to surround the rotor 30. The rotor 30 has, for example, a columnar shape, is supported by the stator 20 via a bearing (not shown), and is disposed coaxially with the wheel 81 (with the wheel shaft 83). Examples of the motor constituting the power generator 10 include a stepping motor without being limited thereto, and a motor suitable for various types of power generation can be used.

As shown in Fig. 4(B), a center shaft 31 protrudes coaxially with the wheel 81 from the center of the surface, of the rotor 30, directed outward in the vehicle width direction. A container portion 40 is fixed to a tip part of the center shaft 31.

The container portion 40 has a hollow disk shape, and the center of the container portion 40 is fixed to the center shaft 31. The container portion 40 can rotate integrally with the center shaft 31 (that is, with the rotor 30). In detail, the container portion 40 includes: a base wall 41 having a circular plate shape whose center is fixed to the center shaft 31; a peripheral wall 42 protruding from an outer edge part of the base wall 41 to a side away from the rotor 30; and a tip wall 43 closing the peripheral wall 42 from the opposite side to the rotor 30. An enclosed space is formed in a portion surrounded by the base wall 41, the peripheral wall 42, and the tip wall 43.

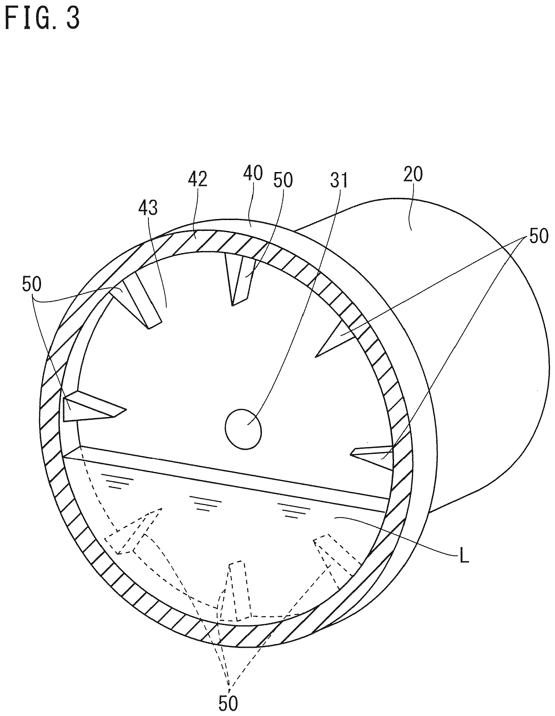

As illustrated in Figs. 3 and 4(A), liquid L is stored in the enclosed space of the container portion 40. Specifically, the liquid L is stored in the container portion 40 in an amount smaller than a volume of the container portion 40, and in the example of the present embodiment, the amount of the liquid L is less than half the volume of the container portion 40 so that a liquid level of the liquid L is lower than a rotation center of the wheel 81 when the container portion 40 is in a stationary state. Examples of the liquid L include antifreeze fluid.

Here, in the power generator 10, the blade portions 50 fixed to the rotor 30 are housed in the container portion 40. The blade portions 50 are disposed so as to be at least partially immersed in the liquid L. In the present embodiment, blade portions 50 protrude from an inner peripheral surface of the peripheral wall 42 of the container portion 40 toward the center (rotation center) of the container portion 40. In addition, a plurality of (for example, eight) the blade portions 50 is provided, and is arranged at equal intervals in a circumferential direction of the container portion 40, for example. In the present embodiment, some blade portions 50 among the blade portions 50 are entirely immersed in the liquid L when the rotor 30 is in a stationary state. In the example of the present embodiment, the blade portions 50 are each formed in an elongated isosceles triangle shape tapered toward the center of the container portion 40 when viewed in the direction toward the central axis of the rotor 30. In the present embodiment, the blade portions 50 are integrally formed with the base wall 41 and the peripheral wall 42 of the container portion 40, but may be formed separately from the container portion 40 and fixed to the container portion 40.

As illustrated in Fig. 4(B), in the example of the present embodiment, gaps are formed between the tip walls 43 of the container portions 40 and the blade portions 50. The gaps constitute communication flow paths 45 through which the liquid L freely flows between regions on both sides of each blade portion 50 in the circumferential direction of the container portion 40.

When the wheel 81 rotates at the time of the vehicle 80 starting to run, the stator 20 rotates integrally with the wheel 81. At this time, inertia works to keep the position of the liquid L in the container portion 40.
Here, the blade portions 50 disposed in the container portion 40 and fixed to the rotor 30 are at least partially immersed in the liquid L. Therefore, even if the wheel 81 starts to rotate, the rotation of the blade portion 50, in other words, the rotation of the rotor 30 can be easily reduced by resistance between the liquid L and the blade portions 50. As a result, when the wheel 81 rotates, the stator and the rotor can be rotated relatively to each other to generate electric power. As a result, it is possible to effectively use rotational energy of the tire to supply electric power to the electric device. In the power generator 10 of the present embodiment, since the blade portions 50 that are immersed in the liquid L are provided, it is possible to restrain the rotor 30 from corotating with the wheel 81 as compared with a case where the blade portions 50 are not provided.

Further, in the power generator 10 of the present embodiment, the plurality of blade portions 50 is provided to protrude from the inner peripheral surface of the container portion 40 fixed to the rotor 30, toward the rotation center side. As a result, the resistance between the blade portions 50 and the liquid L can be large, and the rotation of the rotor 30 can be reduced so that the relative rotation of the rotor 30 with respect to the stator 20 can be increased.

Note that, if the power generator 10 is configured with, for example, a stepping motor, it is also possible to generate electric power using minute relative rotation of the rotor 30 due to swing of the liquid L, and it is possible to continuously generate power using the continuous swing of the liquid L. In addition, as the number of poles and the number of slots of the power generator 10 are larger, it is possible to generate power even with more minute rotation of the rotor 30 caused by shake of the liquid L or the like.

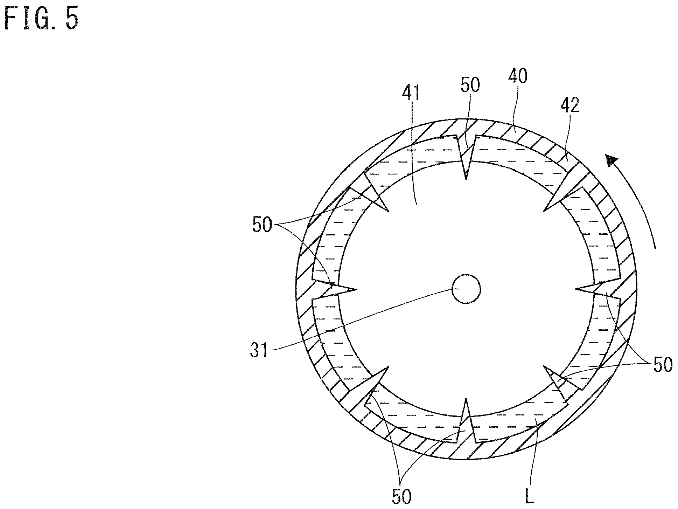

Here, when the wheel 81 rotates at a high speed, the rotor 30 may rotate together due to friction of a bearing or the like. However, in this case, since the liquid L moves to the outer peripheral part of the container portion 40 due to centrifugal force and can therefore be disposed along the entire circumferential direction of the container portion 40 (see Fig. 5), it is possible to restrain the balance of the wheel 81 from being lost due to the rotation of the rotor 30. Note that, a configuration can be considered in which, instead of the liquid L, a solid weight eccentric from a rotation center of the rotor 30 is fixed to the rotor 30 so that the rotor 30 and the stator 20 are made to rotate relatively to each other. However, in this configuration, when the rotor 30 co-rotates with the wheel 81, the balance of the wheel 81 is deteriorated. On the other hand, in the power generator 10 of the present embodiment, it is possible to prevent such deterioration of the balance by storing the liquid L in the container portion 40 as described above.

In the present embodiment, since the communication flow paths 45 are provided on the lateral sides of base end parts of the blade portions 50, when the wheel 81 rotates at a high speed and the rotor 30 co-rotates, the liquid L easily moves in the circumferential direction of the container portion 40 through the communication flow paths 45, and the liquid L is easily disposed along the entire circumferential direction. As a result, it is possible to further prevent or reduce occurrence of an imbalance due to the rotation of the rotor 30. Further, in the power generator 10, since the container portion 40 has a hollow disk shape, when the wheel 81 rotates at a high speed and the rotor 30 co-rotates, it is possible to make it more difficult to cause an imbalance due to the rotation of the rotor 30. Further, since the container portion 40 has a disk shape, the power generator 10 can be made compact in the rotation axis direction of the rotor 30.

However, if the relative rotation between the stator 20 and the rotor 30 becomes too fast during the high-speed rotation of the wheel 81, there is a possibility that the rotation speed exceeds an allowable rotation speed of the bearing between the stator 20 and the rotor 30 and thus to break the bearing. To address this issue, the power generator 10 includes a co-rotation unit that purposely causes the rotor 30 to co-rotate with the stator 20 (the wheel 81) when the rotation speed of the relative rotation between the stator 20 and the rotor 30 exceeds a predetermined value. Specifically, the co-rotation unit includes, for example, a load changing unit (for example, a variable resistor) that is connected in series with an electric device in a power generation circuit in which the power generator 10 is connected to the electric device that receives electric power from the power generator 10. The co-rotation unit can cause the rotor 30 and the stator 20 to co-rotate by changing a load of the load changing unit (for example, by increasing a resistance value of the variable resistance to reduce the current of the power generation circuit). As described above, it is also possible to generate torque for co-rotation between the rotor 30 and the stator 20, depending on the load of the power generation circuit.

As illustrated in Fig. 2, the power generator 10 of the present embodiment is provided in, for example, a tire state monitoring device 100 that monitors a state of the tire 82. The tire state monitoring device 100 is provided with a tire state monitoring terminal 90 that is connected to the power generator 10 and receives electric power from the power generator 10. The tire state monitoring terminal 90 is fixed to the wheel 81, includes a sensor 91 in the tire 82, and transmits a detection result of the sensor 91 to an external receiver, for example, wirelessly. Examples of the sensor 91 include a sensor that detects an internal pressure of the tire 82, a temperature sensor, and the like. Alternatively, for example, the tire state monitoring terminal 90 is attached to a tire valve 89 or the like attached to the wheel 81. Note that a rechargeable battery may be provided in the power generation circuit of the power generator 10.

### [Second embodiment]

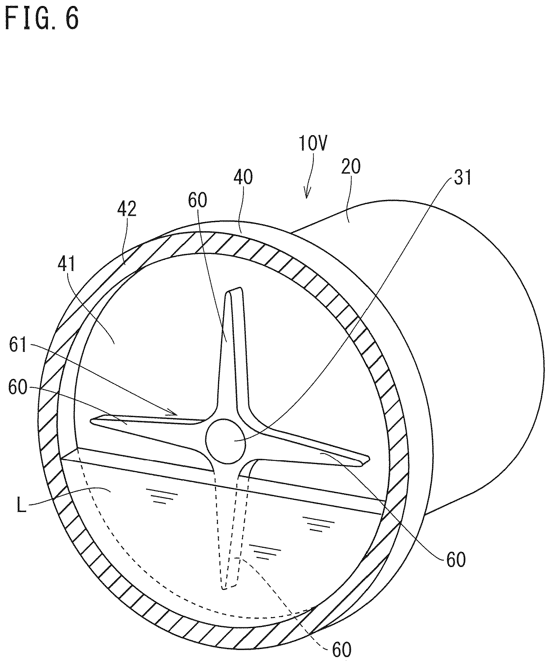

Fig. 6 illustrates a power generator 10V of a second embodiment. The power generator 10V of the present embodiment is similar to the power generator 10 of the first embodiment in that blade portions are fixed to a rotor 30, but is different in that a container portion 40 is fixed to a stator 20 instead of the rotor 30. As in the first embodiment, liquid L is stored in the container portion 40 in an amount smaller than a volume of the container portion 40.

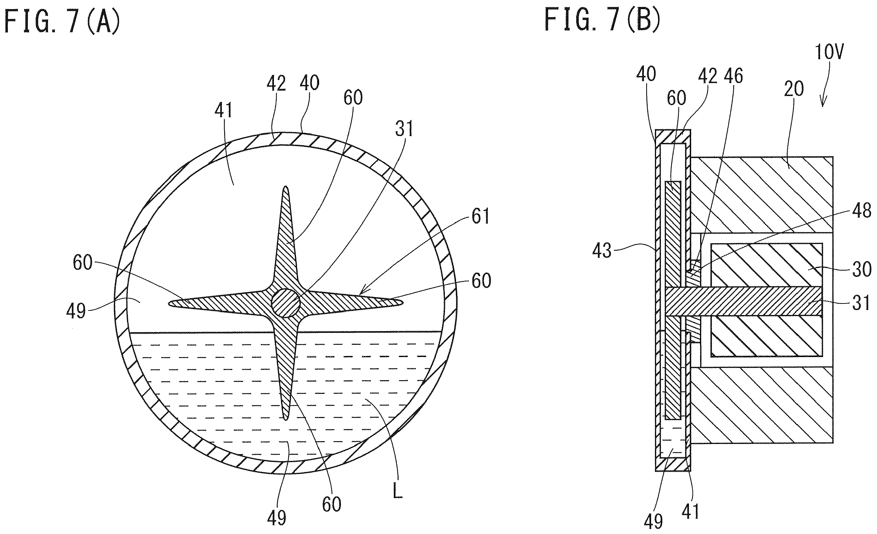

As illustrated in Fig. 7(B), in the present embodiment, a base wall 41 of the container portion 40 is fixed to the stator 20. A through-hole 46 is formed at the center of the base wall 41, and a center shaft 31 of the rotor 30 passes through the through-hole 46. An annular seal portion 48 is fixed to an inner surface of the through-hole 46 of the base wall 41. The seal portion 48 seals between the inner surface of the through-hole 46 of the base wall 41 and the center shaft 31. The center shaft 31 can rotate in a state of being inserted through the seal portion 48.

As illustrated in Figs. 6 and 7(A), blade portions 60 protrude in the radial direction of the container portion 40 from a tip part of the center shaft 31. In the example of the present embodiment, the plurality of blade portions 60 is provided to protrude radially from a rotation center of the rotor 30. For example, the blade portions 60 are arranged at equal intervals in a circumferential direction of the container portion 40. In the example illustrated in Fig. 7(A), the four blade portions 60 are provided, and a group of four blade portions 60 is arranged in a cross shape.

A length of each blade portion 60 (that is, a turning radius) is smaller than a radius of an enclosed space in the container portion 40 (half of an inner diameter of a peripheral wall 42). Therefore, communication flow paths 49 through which the liquid L can freely pass in the circumferential direction are formed between the tips of the blade portions 60 and the peripheral wall 42 of the container portion 40. Further, gaps through which the liquid L can pass are also formed between the base wall 41 of the container portion 40 and respective ones of the blade portions 60 and between the tip wall 43 and respective ones of the blade portions 60 (see Fig. 7(B)).

The power generator 10V of the present embodiment can also achieve effects similar to those of the power generator 10 of the first embodiment. Specifically, in the power generator 10V, when the wheel 81 rotates at the time of the vehicle 80 starting to run, the stator 20 and the container portion 40 rotate integrally. At this time, inertia works to keep the liquid L at the same position in the container portion 40. Here, the blade portions 60 fixed to the rotor 30 and disposed in the container portion 40 are at least partially immersed in the liquid L. Therefore, rotation of the blade portions 60 (that is, the rotor 30) can be reduced by resistance between the liquid L and the blade portions 60. As a result, the stator 20 and the rotor 30 can be rotated relatively to each other to generate power.

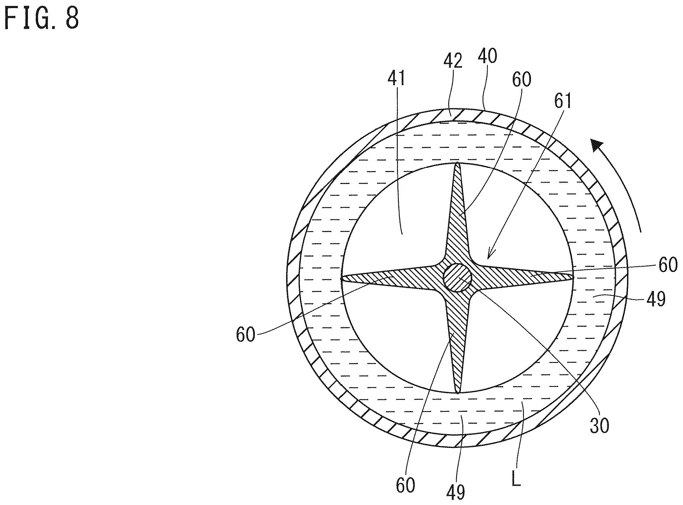

Further, in the power generator 10V, since the plurality of blade portions 60 is provided to radially protrude from the rotation center of the rotor 30, resistance between the blade portions 60 and the liquid can be made large. As a result, the rotation of the rotor 30 can be easily reduced, and the stator 20 and the rotor 30 can be easily rotated relatively each other. In addition, since the radius of the space in the container portion 40 is larger than the turning radius of the blade portions 60, gaps are formed between the inner peripheral surface of the container portion 40 and the blade portions 60. Therefore, when the wheel rotates at a high speed and the rotor co-rotates, the liquid L easily moves in the circumferential direction of the container portion 40 through the gaps, and the liquid L is easily disposed along the entire circumferential direction (see Fig. 8). As a result, it is possible to further prevent or reduce an imbalance of the wheel 81 due to the rotation of the rotor.

The power generator 10V of the present embodiment may also be provided in the tire state monitoring device 100 in the same manner as in the first embodiment.

### [Other embodiments]

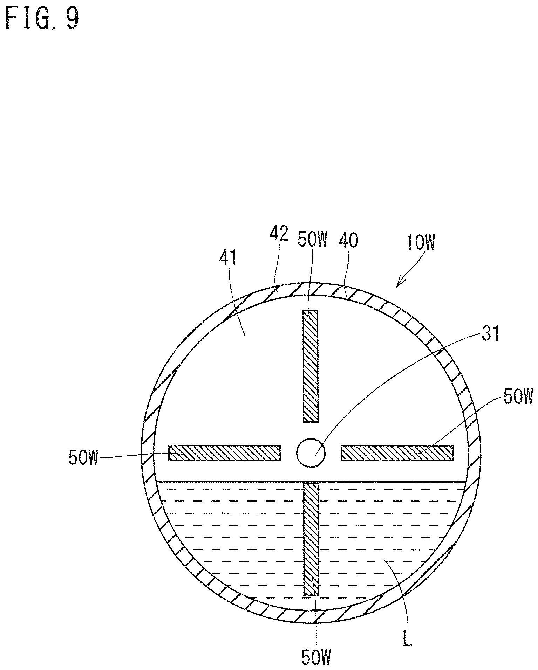

(1) In the above embodiment, the device that receives electric power from the power generator 10 is the tire state monitoring device 100 without being limited thereto, and a light emitting device or the like attached to the wheel 81 may receive the electric power, for example.
(2) In the above embodiments, the gaps through which the liquid L can pass are formed between the blade portions 50 (60) and the tip wall 43 of the container portion 40, but the blade portions 50 and the tip wall 43 may be integrally formed with no gap therebetween.
(3) In the first embodiment, the blade portions 50 may be replaced by blade portions 50W illustrated in Fig. 9. In a power generator 10W illustrated in the drawing, the blade portions 50W are integrally formed with a base wall 41 or a tip wall 43 of a container portion 40. In addition, gaps through which liquid L can pass are formed between the blade portions 50W and a peripheral wall 42 of the container portion 40. In this case, the blade portions 50 may be separated from each other at a central part of the container portion 40 or may be connected to each other. In addition, the blade portions 50 may be integrally formed with both the base wall 41 and the tip wall 43, or when the blade portions 50 are integrally formed with one of the base wall 41 and the tip wall 43, the blade portions 50 may be apart from the other. In addition, in a manner similar to the first embodiment, blade portions 50 protruding from the peripheral wall 42 may be provided at positions, between the blade portions 50W, in the circumferential direction in the container portion 40 of the power generator 10W illustrated in Fig. 9.

### DESCRIPTION OF THE REFERENCE NUMERAL

- 10: power generator
- 20: stator
- 30: rotor
- 40: container portion
- 50: blade portion
- 60: blade portion
- 100: tire state monitoring device
- L: liquid

## Claims

1. A power generator comprising:
a stator fixed to a wheel;
a rotor disposed coaxially with the wheel and rotatably supported by the stator, the power generator generating electric power by relative rotation between the stator and the rotor, and supplying the electric power to an electric device attached to the wheel,
a blade portion fixed to the rotor;
a container portion that is fixed to one of the rotor and the stator and houses the blade portion; and
a liquid which is contained in the container portion in an amount smaller than a volume of the container portion and in which at least a part of the blade portion is immersed.

2. The power generator according to claim 1, wherein the container portion is fixed to the stator, and
the power generator includes:
a penetration portion that is provided on the rotor and penetrates the container portion; and
a seal portion that seals between the penetration portion and an inner surface of a through-hole of the container portion through which the penetration portion passes.

3. The power generator according to claim 2, wherein a plurality of the blade portions is provided to radially protrude from a rotation center of the rotor, and
the container portion has a cylindrical structure having a space having a radius larger than a turning radius of the plurality of blade portions.

4. The power generator according to claim 1, wherein the container portion is fixed to the rotor, and
the blade portion is formed integrally with or is fixed to an inner surface of the container portion.

5. The power generator according to claim 4, wherein a plurality of the blade portions is provided to protrude from an inner peripheral surface of the container portion toward a rotation center side, and
a communication flow path through which the liquid freely flows, in a circumferential direction of the container portion, between regions on both sides of each of the blade portions is provided on a lateral side of the each of the blade portions.

6. The power generator according to claim 5, wherein the container portion has a hollow disk shape.

7. A tire state monitoring device comprising:
the power generator according to any one of claims 1 to 6; and
a tire state monitoring terminal that is fixed to the wheel, includes a sensor disposed inside a tire, and receives electric power from the power generator.
